# FASCICULE DE BREVET EUROPEEN

(11) **EP 0 921 025 B1**
(45) Date de publication et mention de la délivrance du brevet: **15.09.2004**
(21) Numéro de dépôt: 98204009.9
(22) Date de dépôt: 26.11.1998
(51) Int. Cl.: B60K 15/03, B60K 15/035

(54) **Réservoir à carburant**
Kraftstofftank
Fuel tank

(30) Priorité: 02.12.1997 FR 9715269
(43) Date de publication de la demande: 09.06.1999
(73) Titulaire: Inergy Automotive Systems Research (SA), 1120 Bruxelles (BE)
(72) Inventeur: Denis, Alain, 53000 Laval (FR); Rhoumy, Philippe, 53000 Laval (FR); Wouters, Paul, 1800 Vilvoorde (BE); Hore, Georges, 1140 Bruxelles (BE)
(74) Mandataire: Decamps, Alain René François

(56) Documents cités:
- DE-A- 4 304 180
- FR-A- 2 736 878
- US-A- 4 175 526
- US-A- 4 852 761
- US-A- 4 919 103
- US-A- 5 326 514
- US-A- 5 408 977
- US-A- 5 566 705

## Description

Les réservoirs à carburant, en particulier pour véhicules à moteur, comportent le plus souvent un orifice de mise à l'air permettant l'équilibrage de la pression interne et de la pression atmosphérique, par exemple lors de variations du niveau de carburant résultant du remplissage du réservoir ou de la consommation de carburant par le moteur, ou encore lors de variations de température.

Cet orifice de mise à l'air est classiquement raccordé à l'atmosphère par l'intermédiaire d'un conduit et d'une chambre, appelée couramment canister, contenant une substance adsorbant les vapeurs de carburant, usuellement du charbon actif. Le rôle du canister est d'éviter la libération de vapeurs de carburant dans l'atmosphère.

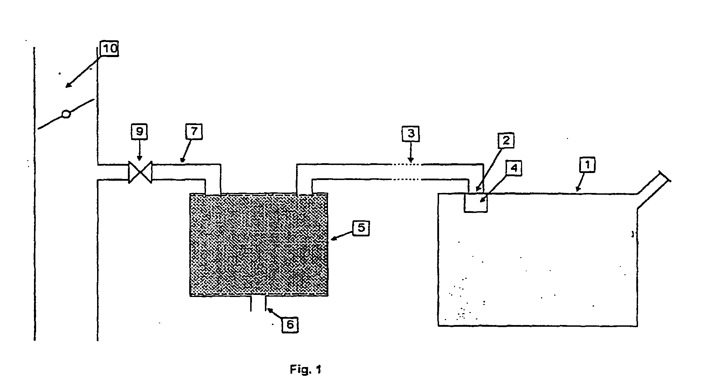

La figure 1 illustre la configuration classique d'un réservoir à carburant (1) équipé d'un conduit de mise à l'air (3) aboutissant à un canister (5) possédant un orifice de communication avec l'atmosphère (6). Afin d'éviter la pénétration de carburant liquide dans le conduit de mise à l'air et le canister, l'orifice de mise à l'air (2) du réservoir est couramment équipé d'un clapet à flotteur (4). Les vapeurs adsorbées dans le canister sont ensuite désorbées, par exemple au moyen d'un conduit de désorption, ou circuit de purge, (7) connecté au circuit d'admission (10) du moteur par l'intermédiaire d'une électrovanne (9). Le canister est donc généralement disposé dans le compartiment moteur.

Ces systèmes classiques présentent quelques désavantages. L'un des principaux est représenté par la grande longueur du conduit de mise à l'air entre le réservoir et le canister. Cette longueur importante implique une perte de charge significative ainsi que de notables pertes évaporatives de carburant par diffusion dans la paroi de ce conduit, usuellement en matière plastique. Ces pertes de carburant sont dommageables au niveau de l'environnement et sont de plus en plus soumises à des contrôles et normes très stricts.

L'utilisation d'un conduit métallique ou d'un conduit polymérique comprenant une couche barrière présente quant à elle des désavantages économiques ou au niveau du poids.

Un autre désavantage concerne la présence de multiples connexions ou raccords entre le conduit de mise à l'air et le réservoir d'une part et le canister de l'autre. Ces conduits et raccords, à l'extérieur du réservoir, représentent toujours des points de perte préférentiels pour le carburant et constituent donc une source de libération de carburant à l'atmosphère. Actuellement, les pertes de ce type peuvent représenter une fraction importante des pertes évaporatives globales que l'on cherche à réduire.

Afin de tenter de répondre à ces inconvénients, des systèmes dans lesquels le canister est rapproché du réservoir ont été conçus.

Par exemple, le brevet US-A-4 919 103 décrit notamment un réservoir à carburant dans lequel le canister est inséré par une large ouverture et fixé mécaniquement.

Le brevet US-A-5 408 977 décrit un réservoir en matière plastique dont une partie de la paroi forme une loge permettant d'y insérer un canister.

Tous ces systèmes présentent encore certains désavantages. Un de ceux-ci est de maintenir séparées les fabrications du réservoir proprement dit et du canister, ce qui nécessite de coûteuses opérations de production du canister et d'assemblage ultérieur. En outre, les nombreux conduits et connexions présents laissent subsister d'importants risques de pertes évaporatives et de fuites.

On connaît aussi la demande de brevet DE-4304180-A1 qui divulgue un réservoir à carburant réalisé par moulage d'une résine synthétique. Ce réservoir comprend un orifice de mise à l'air (30, 31) et une chambre (29) destinée à contenir une substance absorbant les vapeurs de carburant, la chambre (29) possédant au moins une portion de paroi (24) commune, et venue de moulage, avec une paroi du réservoir.

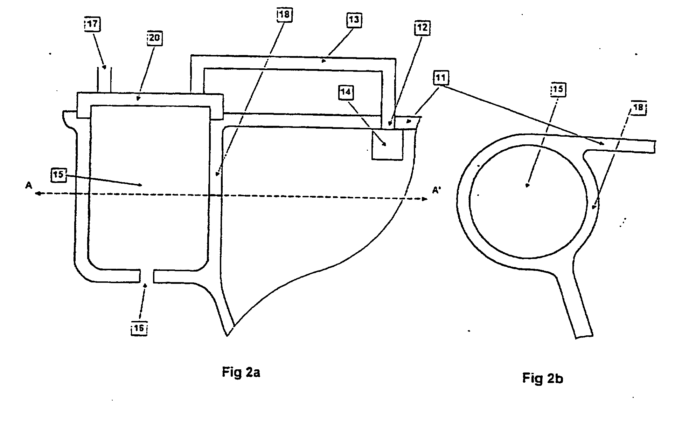

Une demande de brevet français (FR-2736878-A1) décrit qui forme l'état de la technique la plus proche selon la préambule de la revendication 1 décrit (page 5, lignes 5 à 14 et figures 1 et 2) aussi un réservoir à carburant réalisé par moulage d'une résine synthétique. Ce réservoir comprend aussi un orifice de mise à l'air (8) et une chambre (7) destinée à contenir une substance absorbant les vapeurs de carburant, la chambre (7) possédant au moins une portion de paroi commune, et venue de moulage, avec une portion de la paroi du réservoir. La demande FR-2736878-A1 divulgue (page 4, lignes 8 à 13) que l'orifice de mise à l'air (8) et muni d'au moins un clapet (9), qui est un clapet remplissant à la fois les fonctions « anti-vague » et « obturation au retournement »

La présente invention a dès lors pour objet d'intégrer la fabrication du canister à celle du réservoir, de réduire les pertes évaporatives globales et de fuites du système d'alimentation en carburant, et de diminuer le nombre de pièces différentes à produire et à assembler.

Dès lors, l'invention concerne un réservoir à carburant, réalisé par moulage d'une résine synthétique, comprenant un orifice de mise à l'air et une chambre destinée à contenir une substance adsorbant les vapeurs de carburant et possédant au moins une portion de paroi commune, et venue de moulage, avec une portion de la paroi du réservoir selon lequel l'orifice de mise à l'air est muni d'au moins un premier clapet et d'un clapet d'interdiction de surremplissage disposé en série avec le premier clapet.

Le réservoir conforme à la présente invention peut être réalisé en résine synthétique de toute nature, thermoplastique ou thermodurcissable. De préférence, la résine synthétique est thermoplastique. Ladite résine peut comprendre un ou plusieurs polymères. Ces polymères peuvent comprendre des homopolymères, des copolymères ou leurs mélanges. De préférence, le polymère est une polyoléfine. Parmi les polyoléfines, le polyéthylène de haute densité est particulièrement préféré. La résine synthétique peut aussi comprendre tout additif usuel adéquat.

La paroi du réservoir peut également être monocouche ou multicouche. Dans le cas d'une paroi multicouche, une des couches est de préférence une couche composée d'une résine présentant un effet barrière au carburant.

La paroi du réservoir peut encore avoir subi un traitement de surface quelconque. Il peut s'agir notamment d'un traitement chimique, comme la fluoration ou la sulfonation, destiné à diminuer la perméabilité de la paroi vis-à-vis des hydrocarbures.

Le réservoir peut être réalisé par moulage selon toute technique connue, notamment par extrusion-soufflage ou injection-soudage. La technique d'extrusion-soufflage est souvent retenue.

La substance adsorbant les vapeurs de carburant peut être de toute nature connue. De préférence elle comprend des particules de charbon actif

La chambre destinée à contenir la substance adsorbant les vapeurs de carburant peut se présenter sous diverses formes, pour autant qu'elle possède au moins une portion de paroi commune, et venue de moulage, avec une portion de la paroi du réservoir.

La présente invention permet ainsi de réduire les pertes évaporatives issues du réservoir lui-même. En effet, le carburant diffusant à travers la portion de la , paroi du réservoir commune avec la chambre destinée à contenir la substance adsorbante aboutit directement dans cette chambre au lieu d'être libéré dans l'atmosphère.

De façon avantageuse, la chambre destinée à contenir la substance adsorbante est essentiellement constituée d'une portion de la paroi du réservoir et d'un couvercle rapporté sur cette portion de la paroi. De façon particulièrement avantageuse, la portion de la paroi commune au réservoir et à la chambre est essentiellement constituée par un renfoncement de la paroi du réservoir. Par exemple, dans le cas d'un réservoir réalisé par extrusion-soufflage, ce renfoncement est réalisé grâce à une saillie sur la paroi du moule et/ou grâce à une section mobile du moule venant emboutir la paroi en cours de réalisation. Le renfoncement de la paroi est ensuite rempli de la substance adsorbante et refermé au moyen d'un couvercle de forme adaptée. Cette configuration particulière permet de plus un remplacement aisé de la charge de substance adsorbante en cas de besoin ultérieur.

De manière intéressante, le couvercle comporte les connexions nécessaires au fonctionnement du canister. Afin de réduire encore la perméabilité de l'ensemble aux vapeurs de carburant, le couvercle peut être réalisé en une matière imperméable à celles-ci ou en une matière ayant subi un traitement de surface diminuant sa perméabilité (fluoration par exemple).

L'orifice de mise à l'air et la connexion de celui-ci au canister sont réalisés de toutes manières connues. Selon un mode de réalisation avantageux, l'orifice de mise à l'air est connecté à la chambre par l'intérieur du réservoir. Les éventuelles pertes de carburant résultant de cette connexion resteront ainsi confinées au réservoir, ce qui contribue encore à diminuer les pertes globales en carburant. Par conséquent, cette configuration autorise l'utilisation de matériaux moins imperméables au carburant, et donc moins onéreux pour la réalisation de cette connexion.

Selon une variante particulièrement avantageuse, l'orifice de mise à l'air est situé dans la portion de paroi commune entre la chambre et le réservoir et met directement en communication la chambre et le réservoir. Cette configuration particulière évite totalement le recours à un conduit de mise à l'air et ses connexions associées. Les pertes de charge du circuit de mise à l'air sont ainsi nettement réduites également. Le gain en nombre de pièces à produire ét à assembler est également appréciable.

Quelle que soit la localisation de l'orifice de mise à l'air dans la partie supérieure du réservoir, cet orifice est muni d'au moins un clapet. Le but d'un tel clapet est d'éviter toute pénétration de carburant liquide dans le circuit de mise à l'air (fonction anti-vague ou anti-éjection) et/ou d'obturer ledit orifice en cas de retournement ou de forte inclinaison du véhicule (fonction obturation au retournement). De préférence, ledit clapet remplit à la fois les fonctions "anti-vague" et "obturation au retournement". De façon bien connue, un tel clapet combiné (ROV, "Roll Over Valve") peut être constitué, notamment, d'un flotteur coulissant verticalement dans un manchon et d'une bille de forte densité.

L'orifice de mise à l'air peut encore comporter d'autres accessoires, éventuellement disposés en série avec le clapet ci-dessus. Il comporte touj ours un clapet d'interdiction de surremplissage (ISR) disposé en série avec le clapet ci-dessus. Un tel clapet peut être réalisé, par exemple, au moyen d'une bille posée sur une surface conique de grande ouverture dont le point central est troué. Au repos, et notamment lors du remplissage du réservoir, la bille se positionne au centre du cône et ferme ainsi le circuit de mise à l'air. Lorsque le véhicule est en mouvement, la bille se déplace de la surface et libère ainsi l'orifice.

Les clapets ISR et ROV peuvent avantageusement être combinés en une seule pièce, limitant ainsi les coûts de fabrication et d'assemblage.

Un autre accessoire que l'on peut disposer éventuellement en aval du ou des clapets décrits ci-dessus est un filtre à particules empêchant les poussières ou éventuelles petites particules de la substance adsorbante de pénétrer dans le ou les clapets ou le réservoir.

Dans un mode de réalisation préféré du réservoir conforme à l'invention, la chambre destinée à contenir la substance adsorbante peut contenir différents clapets et accessoires décrits ci-dessus, ou encore d'autres composants comme, par exemple, l'électrovanne commandant l'ouverture et la fermeture du circuit de désorption ou encore un clapet de sécurité pression-dépression (dit SPD) destiné à assurer le maintien de la pression dans le réservoir entre une valeur minimum et une valeur maximum préétablies. Ce mode de réalisation permet d'intégrer mieux encore l'ensemble des composants du circuit de mise à l'air dans ladite chambre.

Dans le cas où cette chambre est formée d'un renfoncement de la paroi du réservoir refermé au moyen d'un couvercle, l'ensemble est alors totalement "invisible" de l'extérieur.

Dans un perfectionnement particulier, la chambre destinée à contenir la substance adsorbante comprend une cloison divisant en deux parties le volume destiné à ladite substance. Cette cloison impose un cheminement en U des vapeurs de carburant, ce qui allonge leur parcours et améliore l'efficacité du système. Cette cloison peut être maintenue par soudage sur une paroi de la chambre ou sur le couvercle éventuel. Avec cette configuration en U, il est particulièrement judicieux de disposer l'orifice de mise à l'air du réservoir, et les éventuels composants associés, et l'orifice du circuit de désorption du même côté de ladite cloison (côté amont), tandis que l'orifice menant à l'atmosphère est disposé de l'autre côté (côté aval) de la cloison. De cette façon, les échanges gazeux sont également optimisés lors de la phase de purge de la substance adsorbante.

Notons encore que, selon une variante particulière , le circuit de désorption, au lieu de comprendre un moyen de mise en communication avec le circuit d'admission, peut avantageusement comprendre un condenseur retournant le carburant liquide directement vers le réservoir. De cette façon, le nombre de conduits entre le réservoir et le compartiment moteur est encore réduit, ce qui contribue à réduire encore les fuites de carburant vers l'atmosphère.

Les figures suivantes illustrent l'invention de façon non limitative.

La figure 2a montre un premier mode de réalisation d'un réservoir non conforme à l'invention.

La figure 2b est une vue en coupe selon la ligne AA' de la figure 2a.

La figure 3a montre un deuxième mode de réalisation d'un réservoir conforme à l'invention.

La figure 3b est une vue en coupe selon la ligne BB' de la figure 3a et, de plus, montre partiellement la charge de matière adsorbante.

Dans ce premier mode de réalisation, tel qu'illustré par les figures 2a et 2b, la paroi (11) du réservoir comprend dans sa partie supérieure un orifice de mise à l'air (12). Ladite paroi (11) possède également une portion (18) commune avec une portion de paroi de la chambre (15) destinée à contenir la substance adsorbante. L'orifice de mise à l'air (12) est relié à la chambre (15) par l'intermédiaire d'un conduit (13) externe au réservoir. Ce conduit (13) est muni à son extrémité du côté réservoir d'un clapet (14) qui combine les fonctions "anti-vague" et "obturation au retournement". A son extrémité opposée, le conduit (13) est fixé à un connecteur porté par le couvercle refermant la chambre (15). Ce couvercle porte également un connecteur relié au circuit de désorption (17). La chambre (15) est munie d'un orifice (16) de communication avec l'atmosphère.

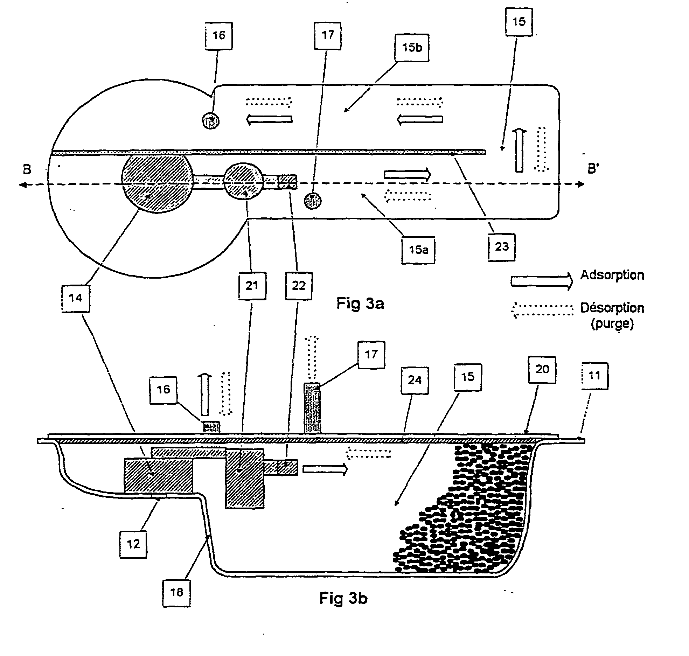

Un deuxième mode de réalisation d'un réservoir, conforme à l'invention, est illustré grâce aux figures 3a et 3b. La chambre (15) est essentiellement constituée d'un renfoncement de la paroi (11) du réservoir, renfoncement sur lequel vient se rapporter le couvercle (20). L'orifice de mise à l'air (12) du réservoir est situé dans la portion de paroi (18) commune au réservoir et à la chambre (15).

Le clapet (14), combinant les fonctions "anti-vague" et "obturation au retournement", est situé à l'intérieur du volume de la chambre (15). Un clapet assurant la fonction "interdiction de surremplissage" (21) est connecté en série avec le clapet (14). La tubulure de sortie de ce clapet (21) est munie d'un petit filtre à particules (22) empêchant les poussières et/ou les particules de la matière adsorbante (charbon actif dans ce cas-ci) de pénétrer dans les différents clapets et dans le réservoir à carburant.

La cloison verticale (23) crée une séparation partielle entre la région "amont" (15a) et la région "aval" (15b) de la chambre (15), ce qui allonge le circuit imposé aux gaz traversant cette chambre et améliore donc l'efficacité de l'adsorbant. La cloison verticale (23) est au choix fixée sur le couvercle (20) ou fixée sur le fond de la chambre (15), c'est-à-dire sur la portion de paroi (18).

Lors de la phase d'adsorption (réservoir en surpression par rapport à l'atmosphère), l'air et les vapeurs de carburant provenant du réservoir pénètrent dans la région "amont" (15a) de la chambre (15) via les clapets (14) et (21) et le filtre (22). Le trajet suivi par ces gaz est montré par les flèches en traits pleins. Après adsorption des vapeurs de carburant, l'air épuré aboutit à l'atmosphère par l'orifice (16), situé du côté "aval" (15b) de la chambre (15).

Lors de la phase de désorption (phase de purge), une dépression est créée dans le circuit de désorption (17) aboutissant dans la région (15a) de la chambre (15). L'air atmosphérique est ainsi aspiré via l'orifice (16) en suivant le trajet indiqué par les flèches en traits pointillés. Le charbon actif désorbe les vapeurs de carburant et l'air enrichi de ces vapeurs pénètre dans le circuit de purge. Ces vapeurs de carburant seront alors soit injectées dans le circuit d'admission moteur, soit condensées et recueillies dans le réservoir.

Afin d'immobiliser le charbon actif et d'empêcher les particules de ce charbon de sortir de la chambre (15) par l'orifice (16) et/ou le circuit (17), le couvercle (20) est muni d'une couche (24) de mousse, par exemple en polyuréthanne.

## Revendications

1. Réservoir à carburant, réalisé par moulage d'une résine synthétique, comprenant un orifice de mise à l'air (12) et une chambre (15) destinée à contenir une substance adsorbant les vapeurs de carburant, et possèdant au moins une portion de paroi (18) commune, et venue de moulage, avec une portion de la paroi (11) du réservoir, **caractérisé en ce que** l'orifice de mise à l'air (12) est muni d'au moins un clapet (14) et d'un clapet d'interdiction de surremplissage (21) disposé en série avec le clapet (14).

2. Réservoir à carburant selon la revendication précédente, dàns lequel le clapet (14) remplit à la fois les fonctions "anti-vague" et "obturation au retournement".

3. Réservoir à carburant selon l'une quelconque des revendications précédentes, réalisé par moulage selon la technique d'extrusion-soufflage.

4. Réservoir à carburant selon l'une quelconque des revendications précédentes, dans lequel la chambre (15) est essentiellement constituée d'une portion de la paroi du réservoir et d'un couvercle (20) rapporté sur cette portion de la paroi.

5. Réservoir à carburant selon la revendication 4, dans lequel la portion de la paroi (18) commune au réservoir et à la chambre (15) est essentiellement constituée par un renfoncement de la paroi du réservoir.

6. Réservoir à carburant selon l'une quelconque des revendications précédentes, dans lequel l'orifice de mise à l'air (12) est connecté à la chambre (15) par l'intérieur du réservoir.

7. Réservoir à carburant selon la revendication 6, dans lequel l'orifice de mise à l'air (12) est situé dans la portion de paroi (18) commune entre la chambre (15) et le réservoir et met directement en communication la chambre (15) et le réservoir.

8. Réservoir à carburant selon l'une quelconque des revendications précédentes, dans lequel le circuit de désorption (17) comprend un condenseur retournant le carburant liquide directement vers le réservoir.

## Patentansprüche

1. Kraftstoffbehälter, der durch Formung aus einem Kunstharz hergestellt ist, mit einer Lüftungsöffnung (12) und einer Kammer (15), die zur Aufnahme eines Kraftstoffdämpfe absorbierenden Materials bestimmt ist, und zumindest einen Wandteil (18) aufweist, der mit einem Teil der Wand (11) des Behälters gemeinsam geformt ist, **dadurch gekennzeichnet, daß** die Lüftungsöffnung (12) mit zumindest einem Ventil (14) und einem das Überfüllen verhindernden Ventil (21) ausgestattet ist, das mit dem Ventil (14) in Reihe geschaltet ist.

2. Kraftstoffbehälter nach dem vorhergehenden Anspruch, bei welchem das Ventil (14) sowohl die Funktionen "Anti-Welle" und "Verschluß beim Wenden" erfüllt.

3. Kraftstoffbehälter nach einem der vorhergehenden Ansprüche, der durch Formung gemäß der Extrusions-Blasformtechnik hergestellt ist.

4. Kraftstoffbehälter nach einem der vorhergehenden Ansprüche, bei welchem die Kammer (15) im wesentlichen durch einen Teil der Behälterwand und einen Deckel (20) gebildet ist, der von diesem Wandteil getragen ist.

5. Kraftstoffbehälter nach Anspruch 4, bei welchem der für den Behälter und die Kammer (15) gemeinsame Teil der Wand (18) im wesentlichen durch eine Verstärkung der Behälterwand gebildet sind.

6. Kraftstoffbehälter nach einem der vorhergehenden Ansprüche, bei welchem die Lüftungsöffnung (12) mit der Kammer (15) über das Innere des Behälters in Verbindung steht.

7. Kraftstoffbehälter nach Anspruch 6, bei welchem die Lüftungsöffnung (12) in dem der Kammer (15) und dem Behälter gemeinsamen Teil der Wand (18) angeordnet ist und die Kammer (15) direkt mit dem Behälter in Verbindung setzt.

8. Kraftstoffbehälter nach einem der vorhergehenden Ansprüche, bei welchem der Desorptionskreis (17) einen Kondensator aufweist, welcher den flüssigen Kraftstoff direkt zum Behälter zurückführt.

## Claims

1. Fuel tank, produced by moulding a synthetic resin, comprising a breather orifice (12) and a chamber (15) that is intended to contain a substance that adsorbs the fuel vapours, said chamber having at least one wall portion (18) that is common, and formed integrally by moulding, with a portion of the wall (11) of the tank, **characterized in that** the breather orifice (12) is fitted with at least one valve (14) and with an over-fill prevention valve (21) placed in series with the valve (14).

2. Fuel tank according to the preceding claim, in which the valve (14) is a valve which fulfils both the "anti-splash" function and the "rollover shut-off' function.

3. Fuel tank according to any one of the preceding claims, produced by moulding using the extrusion-blow moulding technique.

4. Fuel tank according to either one of the preceding claims, in which the chamber (15) essentially consists of a portion of the wall of the tank and of a lid (20) attached to this portion of the wall.

5. Fuel tank according to Claim 4, in which the wall portion (18) that is common to the tank and to the chamber (15) essentially consists of a depression in the wall of the tank.

6. Fuel tank according to any one of the preceding claims, in which the breather orifice (12) is connected to the chamber (15) from inside the tank.

7. Fuel tank according to Claim 6, in which the breather orifice (12) is located in the wall portion (18) that is common to the chamber (15) and the tank and places the chamber (15) and the tank in direct communication.

8. Fuel tank according to any one of the preceding claims, in which the desorption circuit (17) comprises a condenser that returns the liquid fuel directly to the tank.
